# FASCICULE DE BREVET EUROPEEN

(11) **EP 0 860 338 B1**
(45) Date de publication et mention de la délivrance du brevet: **09.10.2002**
(21) Numéro de dépôt: 98400073.7
(22) Date de dépôt: 16.01.1998
(51) Int. Cl.: B60T 13/68

(54) **Vanne pneumatique notamment pour dispositif de freinage d'un véhicule automobile**
Pneumatisches Ventil, insbesondere für eine Kraftfahrzeugbremsvorrichtung
Pneumatic valve especially for a motor vehicle brake device

(30) Priorité: 25.02.1997 FR 9702208
(43) Date de publication de la demande: 26.08.1998
(73) Titulaire: Renault V.I., 69800 St Priest (FR)
(72) Inventeur: Berthaud, Jean, 38790 Saint Georges D'Esperanche (FR)
(74) Mandataire: Fröhling, Werner, Dr.

(56) Documents cités:
- EP-A- 0 333 088
- US-A- 3 882 442
- US-A- 4 877 294
- US-A- 5 267 589

## Description

L'invention concerne une vanne, destinée à être utilisée notamment dans les dispositifs de freinage pneumatiques de véhicules automobiles, en particulier de véhicules poids lourd.

La vanne pneumatique doit assurer la distribution de l'air du compresseur du véhicule aux divers circuits de freinage, qui comprennent habituellement un circuit de frein avant, un circuit de frein arrière, un circuit de frein de stationnement, un circuit des servitudes et un circuit de régénération d'un filtre dessicant.

Pour avoir un dispositif de freinage fiable, même en cas de fuite dans l'un des circuits pneumatiques, il faut pouvoir provoquer par la vanne l'ouverture et la fermeture de chaque circuit et, en cas de fuite, isoler le circuit défaillant des autres circuits.

Comme les systèmes actuels de freinage fonctionnent entièrement mécaniquement, l'ouverture et la fermeture des circuits pneumatiques n'obéissent qu'aux pressions régnant dans les circuits et dans le compresseur. Les pressions d'ouverture et de fermeture étant prescrites en fonction de paramètres mécaniques du dispositif, comme par exemple de la constante de raideur des ressorts présents dans la vanne, qui sont fixés de manière irréversible lors du montage de la vanne, on ne peut guère agir sur l'ouverture et la fermeture des circuits qu'en augmentant ou en abaissant la pression par le compresseur.

Les vannes actuelles, bien qu'étant de structure relativement simple, présentent donc une grande inertie, ce qui se traduit par le fait que les temps de fonctionnement du dispositif, comme le temps d'alimentation des circuits, ne peuvent pas être contrôlés, ce qui peut nuire gravement à la sécurité du freinage.

L'invention vise une vanne qui peut être commandée de l'extérieur et ce de telle sorte qu'elle ouvre ou ferme rapidement les circuits pneumatiques, après que la commande lui en a été donnée.

On y parvient par une vanne comprenant deux disques en céramique à poli spéculaire accolés par l'une de leurs faces et ayant chacun au moins une lumière et des moyens pour déplacer un disque l'un par rapport à l'autre, en sorte que les lumières viennent en coïncidence, les moyens de déplacement comprenant un transducteur électromécanique qui transforme du courant électrique en le déplacement de la partie mécanique du transducteur électromécanique, laquelle est solidaire en déplacement de l'un des disques.

La vanne suivant l'invention permet de commander électriquement, en temps réel et de l'extérieur le passage ou non de fluide dans la vanne.

Suivant un mode de réalisation de l'invention, le transducteur électromécanique transforme une impulsion de courant électrique en un pas de déplacement et le disque déplacé dans son plan comporte plusieurs lumières avec, entre certaines d'entre elles, un intervalle égal au pas de déplacement ou à un multiple entier de celui-ci.

Tout en bénéficiant des avantages de simplicité de fonctionnement et de fiabilité des vannes à disques en céramique, liés notamment au faible coefficient de frottement et à l'étanchéité des disques accolés, ce mode de réalisation permet de commander de manière discrète donc bien contrôlable, l'ouverture et la fermeture des divers circuits pneumatiques. Ce mode de réalisation permet à la vanne d'ouvrir ou de fermer des circuits pneumatiques simultanément.

Dans un mode de réalisation de l'invention, le transducteur transforme du courant en un mouvement de translation de sa partie mécanique et il est prévu un mécanisme transformant ce mouvement de translation en un mouvement de rotation du disque, ce qui permet de contrôler électriquement l'ouverture et la fermeture des circuits par l'angle de rotation du disque, une relation prescrite existant entre le courant et le mouvement en translation d'une part et entre le mouvement en translation et celui en rotation d'autre part.

Un autre mode de réalisation de l'invention, qui tient peu de place, prévoit que la partie mécanique du transducteur électromécanique soit le noyau plongeur d'un électroaimant, le mécanisme comportant une rampe hélicoïdale qui est solidaire du disque et sur laquelle est calé le noyau plongeur.

Un ressort intercalé entre le bâti de la vanne et le noyau plongeur, de sorte à faire prendre au noyau plongeur une position prescrite correspondant à une position prescrite du disque déplacé dans son plan, lorsque le ressort est dans sa position de plus faible contrainte, permet de mettre le disque déplacé dans son plan en une position prescrite de sécurité, lorsque le générateur ne produit pas de courant à cause d'une défaillance.

Dans un mode de réalisation de l'invention, particulièrement adapté au dispositif de freinage de véhicules automobiles, la vanne comprend un premier et un deuxième disques à poli spéculaire accolés par l'une de leur face et ayant plusieurs lumières et des moyens pour déplacer dans son plan le premier disque par rapport au deuxième disque, en sorte que certaines lumières viennent en coïncidence. La vanne comporte un conduit d'alimentation en fluide, un conduit de mise à l'atmosphère et un troisième disque à poli spéculaire, qui est accolé à la face du premier disque, opposée à celle accolée au deuxième disque. Le deuxième disque comporte cinq lumières réparties sur un cercle de celui-ci. Le conduit d'alimentation en fluide communique avec un premier évidement de la face du troisième disque tournée vers le premier disque, lequel s'étend de sorte à couvrir quatre lumières du deuxième disque et la vanne comporte un conduit de mise à l'atmosphère qui communique avec un second évidement de la face du troisième disque tournée vers le premier disque, le second évidement couvrant la cinquième lumière.

Dans un mode de réalisation de l'invention permettant d'alimenter d'abord en fluide les circuits de freinage avant et arrière avant les autres circuits de freinage, de compenser l'un des circuits de freinage, de régénérer le dessicant et d'isoler l'un des circuits par rapport aux autres en cas de défaillance de celui-ci, la vanne comportant un premier conduit de circuit de frein avant, un deuxième conduit de circuit de frein arrière, un troisième conduit de circuit de frein de stationnement, un quatrième conduit de circuit des servitudes, un cinquième conduit de circuit de régénération, un sixième conduit d'alimentation, un septième conduit de mise à l'atmosphère, les lumières des premier et deuxième disques sont disposés et les moyens de déplacement sont commandés électriquement de manière telle,
qu'en une première position du premier disque, la vanne ne fait communiquer que les premier et deuxième conduits avec le sixième conduit d'alimentation,
qu'en une deuxième position du premier disque, la vanne ne fait communiquer que les premier, deuxième, troisième et quatrième conduits avec le sixième conduit d'alimentation,
qu'en une troisième position du premier disque, la vanne ne fait communiquer que le premier conduit de circuit de frein avant avec le sixième conduit d'alimentation,
qu'en une quatrième position du premier disque, la vanne fait communiquer les premier, deuxième, troisième et quatrième conduits avec le sixième conduit d'alimentation et le cinquième conduit de circuit de régénération avec le septième conduit de mise à l'atmosphère,
qu'en une cinquième position du premier disque, la vanne ne fait communiquer aucun conduit,
qu'en une sixième position du premier disque, la vanne fait communiquer les premier, deuxième et quatrième conduits avec le sixième conduit d'alimentation et le cinquième conduit de circuit de régénération avec le septième conduit de mise à l'atmosphère.

Dans un perfectionnement avantageux de l'invention, les premier, deuxième, troisième, quatrième et cinquième conduits communiquent avec les première, deuxième, troisième, quatrième et cinquième lumières du deuxième disque disposées suivant un cercle en un pentagone régulier, dans un premier sens, l'ordre inverse des aiguilles d'une montre, vues de dessus.

Les lumières du premier disque s'étendent, vues de dessus, dans le premier sens, dans le sens inverse des aiguilles d'une montre, sur des premier, deuxième, troisième, quatrième et cinquième arcs de cercle, compris respectivement dans les secteurs angulaires [0;θ ], [5θ;9θ], [10θ;13θ], [15θ;17θ], [20θ;22θ] d'un cercle du premier disque en coïncidence avec celui du deuxième disque,
l'angle θ correspondant à un pas de déplacement et étant sensiblement égal à 14° 24' d'angle,
le premier évidement du troisième disque (8) s'étend dans le premier sens, dans le sens inverse des aiguilles d'une montre, vu de dessus, sur un arc sensiblement de 216°, d'un cercle du troisième disque en coïncidence avec celui du deuxième disque et couvrant les première, deuxième, troisième et quatrième lumières du deuxième disque, et le second évidement du troisième disque s'étend sur un arc du cercle de ce troisième disque couvrant la cinquième lumière du deuxième disque.

Au dessin, donné uniquement à titre d'exemple,
la figure 1 est un synoptique modulaire d'un dispositif de freinage, suivant l'invention, pour un véhicule automobile poids lourd,
la figure 2 est une vue en coupe schématique de la vanne suivant l'invention et,
la figure 3 est une vue de dessus des disques de la vanne suivant l'invention.

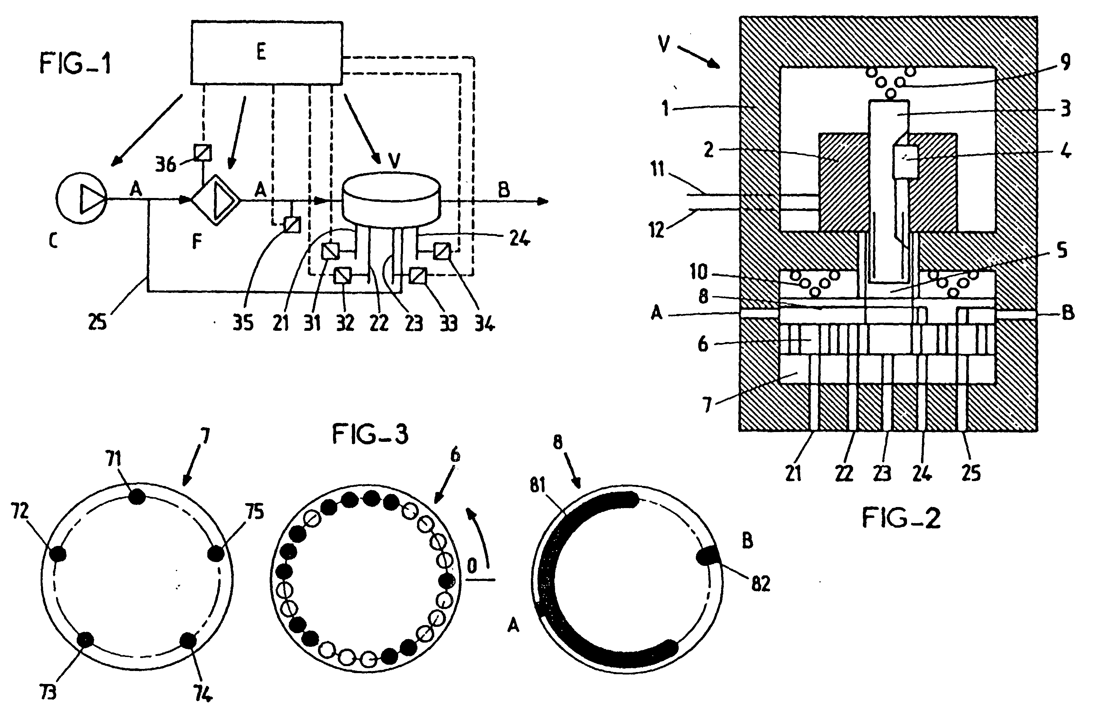

A la figure 1, le dispositif de freinage pneumatique du véhicule automobile comporte un compresseur C d'air relié à une extrémité d'un conduit A d'alimentation, dont l'autre extrémité débouche dans une vanne V. Un filtre F dessicant muni d'un capteur 36 d'humidité est interposé dans le conduit A d'alimentation entre le compresseur et la vanne. Un circuit 21 de frein avant, un circuit 22 de frein arrière, un circuit 23 de frein de stationnement, un circuit 24 des servitudes, sur chacun desquels est prévu un capteur de pression, respectivement 31,32,33,34, peuvent être reliés par l'intermédiaire de la vanne V au conduit A d'alimentation, sur lequel est prévu également un capteur 35 de pression entre le filtre F et la vanne V. Un circuit 25 de régénération sort de la vanne V et débouche dans le conduit A d'alimentation entre le compresseur C et le filtre F et peut communiquer par l'intermédiaire de la vanne V avec un conduit B de mise à l'atmosphère. Un calculateur électronique E est relié par ses entrées au capteur 36 d'humidité, aux capteurs de pression 31 à 35 et à la vanne V et est relié par une sortie à la vanne V et par une autre sortie au compresseur C. Le calculateur électronique E commande l'ouverture et la fermeture des circuits pneumatiques et la marche et l'arrêt du compresseur en fonction des informations fournies par les capteurs.

A la figure 2, la vanne V comporte un bâti cylindrique 1 creux d'axe vertical, dans la face inférieure duquel sont ménagées cinq traversées pour les circuits pneumatiques 21 à 25 et dans la paroi latérale duquel sont ménagées d'un côté une traversée pour le conduit A d'alimentation et de l'autre côté une traversée pour le conduit B de mise à l'atmosphère. Un électroaimant 2 est fixé à l'intérieur du bâti 1 sur un support horizontal issu de la paroi latérale du bâti 1 et laissant subsister un passage cylindrique, et comporte un noyau plongeur 3 traversant le passage cylindre et mobile en translation verticale par rapport au bâti 1. Le noyau plongeur 3 est calé sur une rampe hélicoïdale 5 verticale traversant le passage du support du bâti. Une clavette 4 immobilise en rotation le noyau 3 plongeur par rapport à l'électroaimant 2.

La rampe 5 hélicoïdale est solidaire d'un premier disque 6 horizontal céramique à poli spéculaire, dont la face inférieure est accolée à un deuxième disque 7 horizontal à poli spéculaire et dont la face supérieure est accolée à un troisième disque 8 horizontal à poli spéculaire. Les deuxième et troisième disques 7,8 sont solidaires du bâti 1. Le troisième disque 8 comporte un trou central par lequel passe la rampe 5. Les trois disques et la rampe ont pour axe l'axe vertical du bâti 1. Le conduit A d'alimentation communique par sa traversée avec un premier évidement 81 de la face inférieure du troisième disque 8 et le conduit B de mise à l'atmosphère communique par sa traversée avec un second évidement 82 de la face inférieure du troisième disque 8. Un ressort 9 polyuréthanne de compression est intercalé entre la partie supérieure du noyau 3 plongeur et la face supérieure du bâti 1, de sorte à exercer une face verticale descendante sur le noyau plongeur 3. Des ressorts 10 polyuréthanne de compression sont également insérés entre le bas du support issu du bâti 1 et la face supérieure du troisième disque 8.

Deux conducteurs électriques 11,12 reliés au calculateur électronique non représenté traversent la paroi latérale du bâti 1 et sont reliés chacun à une armature de l'électroaimant 2.

Lorsque l'électroaimant 2 de la vanne reçoit des impulsions de courant du calculateur électronique par l'intermédiaire des conducteurs électriques 11,12, le noyau 3 plongeur se translate verticalement, ce qui provoque une rotation correspondante de la rampe hélicoïdale 5 et du premier disque 6 dans son plan horizontal.

En cas de défaillance de la partie électrique de la vanne, des conducteurs 11, 12 ou du calculateur, le ressort 9 fait descendre le noyau plongeur 3 dans sa position la plus basse, ce qui met le premier disque 6 dans une position prescrite de sécurité.

A la figure 3, le deuxième disque 7 comporte cinq lumières cylindriques verticales, 71,72,73,74,75, dans le sens inverse des aiguilles d'une montre, disposées sur un cercle imaginaire du disque figuré par des tirets, en un pentagone régulier, qui communiquent respectivement avec les traversées pour les circuits 21,22,23,24,25 pneumatiques.

Le premier disque 6 comporte 25 positions d'indexage figurées par les petits disques blancs et noirs et réparties régulièrement sur un cercle imaginaire, figuré par des tirets, en coïncidence avec celui du deuxième disque 7. Chaque position d'indexage correspond à un angle du deuxième disque 6 de 360°/25 soit θ = 14°24'. Le premier disque 6 comprend cinq groupes de lumières, dont le premier occupe une première position d'indexage repérée à la figure par le chiffre 0, dont le deuxième occupe les sixième, septième, huitième et neuvième positions d'indexage, dont le troisième groupe occupe les onzième, douzième et treizième positions d'indexage, dont le quatrième groupe occupe les seizième et dix-septième positions d'indexage et dont le cinquième occupe les vingt-et-unième et vingt-deuxième positions d'indexage, en partant de la première position d'indexage dans le sens inverse des aiguilles d'une montre, les lumières étant figurées par les disques noirs.

Le premier évidement 81 du troisième disque s'étend de manière continue sur un arc d'un cercle imaginaire de ce disque en coïncidence avec celui du deuxième disque 7, dans un secteur angulaire en vis-à-vis des première, deuxième, troisième et quatrième lumières 71,72,73,74 du deuxième disque 7. Le deuxième évidement 82 du troisième disque 8 est en vis-à-vis de la cinquième lumière 75 du deuxième disque 7.

Suivant la position angulaire du premier disque 6, commandée par pas d'angle θ par les impulsions de courant appliquées par le calculateur E électronique à l'électroaimant 2 de la vanne, il vient en coïncidence des lumières 71,72,73,74,75 du deuxième disque 7 une lumière ou une partie pleine du premier disque 6, ce qui ouvre ou ferme le circuit pneumatique correspondant 21,22,23,24,25.

En mettant la lumière en huitième position d'indexage du premier disque 6 en coïncidence avec la première lumière 71 du deuxième disque 7 sous la commande du calculateur électronique, on alimente seulement les circuits 21,22 de frein avant et arrière en fluide, le circuit 23 de frein de stationnement, le circuit des servitudes 24 et le circuit 25 de régénération étant obturés par le premier disque 6.

En mettant la lumière en septième position d'indexage du premier disque 6 en coïncidence avec la première lumière 71 du deuxième disque 7, sous la commande du calculateur électronique, on alimente en fluide à la fois le circuit 21 de frein avant, le circuit 22 de frein arrière, le circuit 23 de stationnement et le circuit 24 des servitudes, le circuit 25 de régénération restant obturé par le premier disque 6.

Pour compenser si nécessaire le circuit 21 de frein avant, on met la lumière en neuvième position d'indexage du premier disque 6 en coïncidence avec la première lumière 71 du deuxième disque 7, sous la commande du calculateur électronique, ce qui permet de réalimenter seulement le circuit 21 de frein avant en obturant les autres circuits par le premier disque 6.

En mettant la lumière en sixième position d'indexage du premier disque 6 en coïncidence avec la première lumière 71 du deuxième disque 7, sous la commande du calculateur électronique, et en débrayant le compresseur sous la commande du calculateur électronique, on régénère le dessicant du filtre par l'air provenant des circuits 21,22,23,24.

En mettant en coïncidence la partie pleine en dixième position d'indexage du premier disque 6 avec la première lumière 71 du deuxième disque 7, sous la commande du calculateur électronique, on obture tout les circuits par le premier disque 6.

En cas de défaillance d'un circuit, par exemple du circuit 23 de frein de stationnement, on isole celui-ci des autres circuits en mettant en coïncidence sous la commande du calculateur électronique la lumière en dix-septième position d'indexage du premier disque 6 avec la première lumière 71 du deuxième disque 7, pour pouvoir continuer à régénérer le dessicant.

Les deuxième, troisième, quatrième et cinquième groupes de lumières du premier disque 6 peuvent également couvrir entièrement respectivement les arcs de cercle compris entre les sixième et neuvième positions d'indexage, entre les onzième et treizième positions d'indexage, entre les seizième et dix-septième positions d'indexage et entre les vingt-et-unième et vingt-deuxième positions d'indexage.

## Revendications

1. Vanne comprenant deux disques (6,7) en céramique à poli spéculaire accolés par l'une de leurs faces et ayant chacun au moins une lumière et des moyens (2,3,4,5) pour déplacer dans son plan un disque (6) par rapport à l'autre (7), en sorte que les lumières viennent en coïncidence, **caractérisée ce que** les moyens (2,3,4,5) de déplacement comprennent un transducteur (2,3) électromécanique transformant du courant électrique en le déplacement de la partie mécanique (5) du transducteur électromécanique, laquelle est solidaire en déplacement de l'un (6) des disques.

2. Vanne suivant la revendication 1, **caractérisée en ce que** le transducteur (2,3) électromécanique transforme une impulsion de courant électrique en un pas (θ) de déplacement et le disque (6) déplacé dans son plan comporte plusieurs lumières, avec, entre certaines d'entre elles, un intervalle égal au pas de déplacement ou à un multiple entier du pas (θ) de déplacement.

3. Vanne suivant l'une des revendications précédentes, **caractérisée en ce que** le transducteur (2,3) transforme du courant en un mouvement de translation de sa partie (3) mécanique et il est prévu un mécanisme transformant ce mouvement de translation en un mouvement de rotation du disque (6).

4. Vanne suivant l'une des revendications précédentes, **caractérisée en ce que** la partie mécanique (3) du transducteur (2,3) est le noyau plongeur d'un électroaimant (2), le mécanisme comportant une rampe hélicoïdale (5) qui est solidaire du disque (6) et sur laquelle est calé le noyau plongeur (3).

5. Vanne suivant la revendication 4, **caractérisée en ce qu'**un ressort est intercalé entre le bâti (1) de la vanne et le noyau plongeur (3), de sorte à faire prendre au noyau plongeur (3) une position prescrite correspondant à une position prescrite du disque (6) déplacé dans son plan, lorsque le ressort est dans sa position de plus faible contrainte.

6. Vanne selon la revendication 1 comprenant un premier disque (6) et un deuxième disque (7) à poli spéculaire, **caractérisée en ce qu'**elle comporte un conduit (A) d'alimentation en fluide, un conduit (B) de mise à l'atmosphère et un troisième disque (8) à poli spéculaire, qui est accolé à la face du premier disque (6), opposée à celle accolée au deuxième disque (7), le deuxième disque (7) comporte cinq lumières (71,72,73,74,75) réparties sur un cercle de celui-ci et le conduit (A) d'alimentation en fluide communique avec un premier évidement (81) de la face du troisième disque (8) tournée vers le premier disque (6), lequel s'étend de sorte à couvrir quatre lumières du deuxième disque (7), et le conduit (B) de mise à l'atmosphère communique avec un second évidement de la face du troisième disque (8) tournée vers le premier disque (6), le second évidement couvrant la cinquième lumière (75).

7. Vanne suivant l'une des revendications précédentes, **caractérisée en ce qu'**elle comporte un premier conduit (21) de circuit de frein avant, un deuxième conduit (22) de circuit de frein arrière, un troisième conduit (23) de circuit de frein de stationnement, un quatrième conduit (24) de circuit des servitudes, un cinquième conduit (25) de circuit de régénération, un sixième conduit (A) d'alimentation, un septième conduit (B) de mise à l'atmosphère, les lumières des disques étant disposées et les moyens de déplacement sont commandés électriquement de manière telle,
qu'en une première position du premier disque (6), la vanne ne fait communiquer que les premier et deuxième conduits (21, 22) avec le sixième conduit (A) d'alimentation,
qu'en une deuxième position du premier disque (6), la vanne ne fait communiquer que les premier, deuxième, troisième et quatrième conduits (21,22,23,24) avec le sixième conduit (A) d'alimentation,
qu'en une troisième position du premier disque (6), la vanne ne fait communiquer que le premier conduit (21) de circuit de frein avant avec le sixième conduit (A) d'alimentation,
qu'en une quatrième position du premier disque (6), la vanne fait communiquer les premier, deuxième, troisième, quatrième conduits avec le sixième conduit (A) d'alimentation et le cinquième conduit de circuit (25) de régénération avec le septième conduit (B) de mise à l'atmosphère,
qu'en une cinquième position du premier disque (6), la vanne ne fait communiquer aucun conduit,
qu'en une sixième position du premier disque (6), la vanne fait communiquer les premier, deuxième et quatrième conduits avec le sixième conduit (A) d'alimentation et le cinquième conduit (25) de régénération avec le septième conduit (B) de mise à l'atmosphère.

8. Vanne suivant les revendications 6 et 7, **caractérisée en ce que** les premier, deuxième, troisième, quatrième et cinquième conduits (21,22,23,24,25) communiquent avec des première, deuxième, troisième, quatrième et cinquième lumières (71,72,73,74,75) du deuxième disque (7) disposées suivant un cercle en un pentagone régulier, vues de dessus, dans un premier sens,
les lumières du premier disque (6) s'étendent, dans le premier sens, vues de dessus, dans des premier, deuxième, troisième, quatrième et cinquième arcs de cercle, compris respectivement dans les secteurs angulaires [0;θ ], [5θ; 9θ], [10θ;13θ], [15θ;17θ], [20θ;22θ] d'un cercle du premier disque (6) en coïncidence avec celui du deuxième disque (7),
l'angle θ correspondant à un pas de déplacement du premier disque (6) et étant sensiblement égal à 14°24' d'angle,
le premier évidement du troisième disque (8) s'étend, dans le premier sens, vu de dessus, sur un arc sensiblement de 216°, d'un cercle du troisième disque en coïncidence avec celui du deuxième disque (7) et couvrant les première, deuxième, troisième et quatrième lumières (71,72,73,74) du deuxième disque (7), et le second évidement du troisième disque (8) s'étend sur un arc du cercle de ce troisième disque couvrant la cinquième lumière (75) du deuxième disque (7).

9. Dispositif de freinage, comportant un compresseur (C), un filtre (F) dessicant, un circuit de frein avant, un circuit de frein arrière, un circuit de frein de stationnement, un circuit des servitudes, un circuit de régénération et une vanne (V), qui fait communiquer ou non les circuits avec le compresseur (C) par l'intermédiaire d'un conduit (A) d'alimentation, le filtre (F) dessicant étant interposé dans le conduit (A) d'alimentation entre le compresseur (C) et la vanne (V) et le circuit de régénération communiquant avec le conduit (A) d'alimentation entre le compresseur (C) et le filtre dessicant (F), **caractérisé en ce que** la vanne (V) est une vanne suivant l'une des revendications précédentes.

## Patentansprüche

1. Ventil mit zwei hochglanzpolierten Keramikscheiben (6,7), die mit jeweils einer ihrer Flächen aneinander liegen und die jeweils mit wenigstens einer Öffnung versehen sind und mit einer Anordnung (2,3,4,5) um eine Scheibe (6) relativ zur anderen Scheibe in ihrer Ebene derart zu bewegen, dass die Öffnungen übereinander zu liegen kommen, **dadurch gekennzeichnet, dass** die Anordnung zur Bewegung (2,3,4,5) einen elektromechanischen Wandler (2,3) aufweist, der elektrischen Strom in die Bewegung des mechanischen Teils (5) des elektromechanischen Wandlers umwandelt, der bewegungsfest mit einer der Scheiben (6) verbunden ist.

2. Ventil nach Anspruch 1, **dadurch gekennzeichnet, dass** der elektromechanische Wandler (2,3) einen elektrischen Stromimpuls in einen Bewegungsschritt (θ) umwandelt und dass die in ihrer Ebene bewegbare Scheibe (6) mehrere Öffnungen aufweist, von denen einige einen Abstand voneinander aufweisen, der gleich dem Bewegungsschritt oder einem ganzzahligen Vielfachen des Bewegungsschrittes (θ) ist.

3. Ventil nach einem der vorhergehenden Ansprüche, **dadurch gekennzeichnet, dass** der Wandler (2,3) Strom in eine Verschiebebewegung seines mechanischen Teils (3) umwandelt und dass ein Mechanismus vorgesehen ist, der die Verschiebebewegung in eine Verdrehbewegung der Scheibe (6) umwandelt.

4. Ventil nach einem der vorhergehenden Ansprüche, **dadurch gekennzeichnet, dass** der mechanische Teil (3) des Wandlers (2,3) der Tauchanker eines Elektromagneten (2) ist und dass der Mechanismus eine spiralförmige Rampe (5) aufweist, die fest mit der Scheibe (6) verbunden ist und mit der der Tauchanker (3) verkeilt ist.

5. Ventil nach Anspruch 4, **dadurch gekennzeichnet, dass** zwischen dem Gehäuse (1) des Ventils und dem Tauchanker (3) eine Feder derart eingesetzt ist, dass der Tauchanker (3) eine vorgegebene Stellung einnimmt entsprechend einer vorgegebenen Stellung der in ihrer Ebene verdrehten Scheibe (6), wenn die Feder in ihrer am wenigsten belasteten Stellung ist.

6. Ventil nach Anspruch 1, mit einer ersten hochglanzpolierten Scheibe (6) und mit einer zweiten hochglanzpolierten Scheibe (7), **dadurch gekennzeichnet, dass** es eine Zufuhrleitung (A) für ein Fluid, eine Leitung (B) für die Verbindung mit der Atmosphäre und eine dritte hochglanzpolierte Scheibe (8) aufweist, die an derjenigen Fläche der ersten Scheibe (6) anliegt, die derjenigen gegenüberliegt, an der die zweite Scheibe (7) anliegt, dass die zweite Scheibe (7) fünf Öffnungen (71,72,73,74,75) aufweist, die entlang eines Kreises verteilt ausgebildet sind und dass die Zufuhrleitung (A) für das Fluid mit einer ersten Aussparung (81) in derjenigen Fläche der dritten Scheibe (8) zusammenwirkt, die der ersten Scheibe (6) zugewandt ist und die derart ausgebildet ist, dass sie vier Öffnungen der zweiten Scheibe (7) abdeckt und dass die Leitung (B) zur Verbindung mit der Atmosphäre mit einer zweiten Aussparung in derjenigen Fläche der dritten Scheibe (8) zusammenwirkt, die der ersten Scheibe (6) zugewandt ist, wobei die zweite Aussparung die fünfte Öffnung (75) abdeckt.

7. Ventil nach einem der vorhergehenden Ansprüche, **dadurch gekennzeichnet, dass** es eine erste Leitung (21) für den vorderen Bremskreis, eine zweite Leitung (22) für den hinteren Bremskreis, eine dritte Leitung (23) für den Kreis der Fesstellbremse, eine vierte Leitung (24) für weitere Verbraucher, eine fünfte Leitung (25) für einen Regenerierkreis, eine sechste Leitung (A) für die Zufuhr und eine siebte Leitung (B) für die Verbindung mit der Atmosphäre aufweist, wobei die Öffnungen der Scheiben derart angeordnet sind und die Anordnung zu Bewegung derart elektrisch angesteuert wird, dass:
in einer ersten Stellung der ersten Scheibe (6) das Ventil nur die erste und die zweite Leitung (21,22) mit der sechsten Leitung (A) für die Zufuhr verbindet,
in einer zweiten Stellung der ersten Scheibe (6) das Ventil nur die erste, die zweite, die dritte und die vierte Leitung (21,22,23,24) mit der sechsten Leitung (A) für die Zufuhr verbindet,
in einer dritten Stellung der ersten Scheibe (6) das Ventil nur die erste Leitung (21) für den vorderen Bremskreis mit der sechsten Leitung (A) für die Zufuhr verbindet
in einer vierten Stellung der ersten Scheibe (6) das Ventil die erste, die zweite, die dritte und die vierte Leitung mit der sechsten Leitung (A) für die Zufuhr und die fünfte Leitung (25) für den Regenerierkreis mit der siebten Leitung (B) für die Verbindung mit der Atmosphäre verbindet,
in einer fünften Stellung der ersten Scheibe (6) das Ventil keine der Leitungen mit einer anderen verbindet, in einer sechsten Stellung der ersten Scheibe (6) das Ventil die erste, die zweite und die vierte Leitung mit der sechsten Leitung (A) für die Zufuhr und die fünfte Leitung (25) für die Regenerierung mit der siebten Leitung (B) für die Verbindung mit der Atmosphäre verbindet.

8. Ventil nach Ansprüchen 6 und 7, **dadurch gekennzeichnet, dass** die erste, die zweite, die dritte, die vierte und die fünfte Leitung (21,22,23,24,25) mit der ersten, der zweiten, der dritten, der vierten und der fünften Öffnung (71,72,73,74,75) in der zweiten Scheibe (7) in Verbindung stehen, wobei die Öffnungen in einem regelmässigen Fünfeck auf einer Kreisbahn angeordnet sind und wobei in einer ersten Richtung entgegen dem Uhrzeigersinn, in Draufsicht gesehen, die Öffnungen der ersten Scheibe sich, in Draufsicht gesehen und in der ersten Richtung entgegen dem Uhrzeigersinn entlang eines ersten, eines zweiten, eines dritten, eines vierten und eines fünften Kreisbogens erstrecken, die gemäss den folgenden Winkelsektoren angeordnet sind: [ 0;θ ], [ 5θ;9θ ],[ 10θ;13θ ],[ 15θ;17θ ], [ 20θ;22θ ] auf einem Kreis auf der ersten Scheibe (6), der deckungsgleich ist mit demjenigen auf der zweiten Scheibe (7), wobei der Winkel θ einem Bewegungsschritt der ersten Scheibe (6) entspricht und im wesentlichen den Winkelwert 14 ° 24 ' aufweist; die erste Aussparung der dritten Scheibe (8) erstreckt sich in erster Richtung entgegen dem Uhrzeigersinn, in Draufsicht gesehen, entlang eines Bogens von im wesentlichen 216 ° eines Kreises auf der dritten Scheibe, der deckungsgleich ist mit demjenigen auf der zweiten Scheibe (7) und die erste, die zweite, die dritte und die vierte Öffnung (71,72,73,74) der zweiten Scheibe (7) abdeckt, während die zweite Aussparung der dritten Scheibe (8) sich entlang eines Kreisbogens dieser dritten Scheibe erstreckt und dabei die fünfte Öffnung (75) in der zweiten Scheibe abdeckt.

9. Bremsvorrichtung, mit einem Kompressor (C), mit einem Trockenfilter (F), mit einem vorderen Bremskreis, mit einem hinteren Bremskreis, mit einem Bremskreis für die Feststellbremse, mit einem Kreis für weitere Verbraucher, mit einem Regenerierkreis und mit einem Ventil (V) , welches die Kreise mit dem Kompressor (C) verbindet oder nicht verbindet über eine Leitung (A) für die Zufuhr, wobei das Trockenfilter (F) in die Leitung (A) für die Zufuhr zwischen dem Kompressor (C) und dem Ventil (V) eingesetzt ist und der Renegerierkreis mit der Leitung (A) für die Zufuhr in Verbindung steht an einer Stelle zwischen dem Kompressor (C) und dem Trockenfilter (F), **dadurch gekennzeichnet, dass** das Ventil (V) ein Ventil nach einem der vorhergehenden Ansprüche ist.

## Claims

1. Valve comprising two mirror-polished ceramic discs (6, 7) face to face via one of their faces and each having at least one aperture and means (2, 3, 4, 5) for displacing one disc (6) in its plane with respect to the other (7) so that the apertures coincide, **characterized in that** the displacement means (2, 3, 4, 5) comprise an electromechanical transducer (2, 3) converting electrical current into the displacement of the mechanical part (5) of the electromechanical transducer, which mechanical part is secured in terms of displacement to one (6) of the discs.

2. Valve according to Claim 1, **characterized in that** the electromechanical transducer (2, 3) converts an electric current pulse into a step (θ) of displacement and the disc (6) displaced in its plane has several apertures with, between some of them, a spacing equal to the displacement step or to an integer multiple of the displacement step (θ).

3. Valve according to one of the preceding claims, **characterized in that** the transducer (2, 3) converts current into a translational movement of its mechanical part (3) and there is a mechanism converting this translational movement into a rotational movement of the disc (6).

4. Valve according to one of the preceding claims, **characterized in that** the mechanical part (3) of the transducer (2, 3) is the core plunger of an electromagnet (2), the mechanism comprising a helical ramp (5) which is secured to the disc (6) and on which the core plunger (3) is fixed.

5. Valve according to Claim 4, **characterized in that** a spring is inserted between the outer structure (1) of the valve and the core plunger (3) so as to cause the core plunger (3) to adopt a prescribed position, corresponding to a prescribed position of the disc (6) displaced in its plane, when the spring is in its position of lowest stress.

6. Valve according to Claim 1, comprising a first mirror-polished disc (6) and a second mirror-polished disc (7) **characterized in that** this valve comprises a fluid supply duct (A), a vent duct (B) and a third mirror-polished disc (8) which is face to face with the opposite face of the first disc (6) to the one which faces the second disc (7), the second disc (7) has five apertures (71, 72, 73, 74, 75) distributed in a circle thereof and the fluid supply duct (A) communicates with a first recess (81) in the face of the third disc (8) which faces towards the first disc (6), which recess extends in such a way that it covers four apertures of the second disc (7), and the vent duct (B) communicates with a second recess in the face of the third disc (8) which faces towards the first disc (6), the second recess covering the fifth aperture (75).

7. Valve according to one of the preceding claims, **characterized in that** it comprises a first, front brake circuit, duct (21), a second, rear brake circuit, duct (22), a third, parking brake circuit, duct (23), a fourth, auxiliary circuit, duct (24), a fifth, regeneration circuit, duct (25), a sixth, supply, duct (A), a seventh, vent, duct (B), the apertures of the discs being arranged and the displacement means are electrically operated in such a way:
- that when the first disc (6) is in a first position, the valve causes only the first and second ducts (21, 22) to communicate with the sixth, supply, duct (A),
- that when the first disc (6) is in a second position, the valve causes only the first, second, third and fourth ducts (21, 22, 23, 24) to communicate with the sixth, supply, duct (A),
- that when the first disc (6) is in a third position, the valve causes only the first, front brake circuit, duct (21) to communicate with the sixth, supply, duct (A),
- that when the first disc (6) is in a fourth position, the valve causes only the first, second, third, fourth ducts to communicate with the sixth, supply, duct (A) and the fifth, regeneration circuit, duct (25) to communicate with the seventh, vent, duct (B),
- that when the first disc (6) is in a fifth position, the valve causes no ducts to communicate,
- that when the first disc (6) is in a sixth position, the valve causes the first, second and fourth ducts to communicate with the sixth, supply, duct (A) and the fifth, regeneration, duct (25) to communicate with the seventh, vent, duct (B).

8. Valve according to Claims 6 and 7, **characterized in that** the first, second, third, fourth and fifth ducts (21, 22, 23, 24, 25) communicate with first, second, third, fourth and fifth apertures (71, 72, 73, 74, 75) of the second disc (7) which are arranged in a circle as a regular pentagon, viewed from above, in a first direction,
the apertures in the first disc (6) run, in the first direction, viewed from above, in first, second, third, fourth and fifth circular arcs bounded respectively within the angular sectors [0;θ], [5θ;9θ], [10θ;13θ], [15θ;17θ], [20θ;22θ] of a circle of the first disc (6) coinciding with that of the second disc (7),
the angle θ corresponding to a step of displacement of the first disc (6)and being roughly equal to 14°24' of angle,
the first recess in the third disc (8) extends, in the first direction, viewed from above, over an arc of roughly 216° of a circle of the third disc coinciding with that of the second disc (7) and covering the first, second, third and fourth apertures (71, 72, 73, 74) of the second disc (7), and the second recess in the third disc (8) extends over an arc of a circle of this third disc covering the fifth aperture (75) of the second disc (7).

9. Braking device comprising a compressor (C), a desiccating filter (F), a front brake circuit, a rear brake circuit, a parking brake circuit, an auxiliary circuit, a regeneration circuit and a valve (V) which causes the circuits to communicate or not communicate with the compressor (C) via a supply duct (A), the desiccating filter (F) being inserted in the supply duct (A) between the compressor (C) and the valve (V) and the regeneration circuit communicating with the supply duct (A) between the compressor (C) and the desiccating filter (F), **characterized in that** the valve (V) is a valve according to one of the preceding claims.
